(19)

**Europäisches Patentamt**

**European Patent Office**

**Office européen des brevets**

(11) **EP 4 738 918 A1**

(12) **EUROPEAN PATENT APPLICATION**

(43) Date of publication:
06.05.2026 Bulletin 2026/19

(21) Application number: 25209835.5

(22) Date of filing: 20.10.2025

(51) International Patent Classification (IPC):
*H04W 28/02* (2009.01)   *H04L 47/25* (2022.01)
*H04L 47/30* (2022.01)   *H04L 47/38* (2022.01)
*H04L 65/752* (2022.01)

(52) Cooperative Patent Classification (CPC):
H04L 47/38; H04L 47/25; H04L 47/30;
H04L 65/752; H04L 65/80; H04W 28/0231;
H04W 28/0247; H04W 28/0278; H04W 28/0284;
H04W 28/0289

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: 29.10.2024 US 202463713440 P
30.09.2025 US 202519345686

(71) Applicant: **Meta Platforms Technologies, LLC**
**Menlo Park, CA 94025 (US)**

(72) Inventors:
• **Yu, Liwen**
  **Menlo Park (US)**
• **Ji, Zhu**
  **Menlo Park (US)**

(74) Representative: **Murgitroyd & Company**
**165-169 Scotland Street**
**Glasgow G5 8PL (GB)**

(54) **XR (EXTENDED REALITY) DEVICE ADAPTATION FOR ENHANCED LATENCY PERFORMANCE**

(57)   In some examples, a device may include a network interface wirelessly connected to a cellular network, one or more memories, and one or more processors. The one or more memories may store a network stack including an application layer and a lower layer lower than the application layer. The one or more processors may determine, based at least on first data obtained via the network interface or from the lower layer, that at least one of cell loading or network congestion is present. The one or more processors may adjust, based at least on the first data, one or more operations at the application layer to generate one or more frames. The one or more processors may wirelessly transmit, via the network interface, the one or more frames.

800

| Store, in one or more memories, a network stack comprising an application layer, a transport layer, and a lower layer lower than the transport layer 802 |
| :---: |
| Determine, by one or more processors, based at least on first data obtained via a network interface wirelessly connected to a cellular network or from the lower layer, that at least one of cell loading or network congestion is present 804 |
| Adjust, by the one or more processors, based at least on the first data, one or more operations at the application layer to generate one or more frames 806 |
| Wirelessly transmit, via the network interface, the one or more frames 808 |

FIG. 8

EP 4 738 918 A1

## Description

### TECHICAL FIELD

The present disclosure is generally related to wireless communication, including but not limited to adapting operations of a device based on network conditions.

### BACKGROUND

Cellular communication technology (e.g., 3G, 4G, 5G) allows high data rate communication. In such an environment, a user equipment (UE) can generate and transmit data to a base station. A base station may provide or forward data from the UE onward to the destination. A base station can provide or forward data from another base station to another UE.

### SUMMARY

According to a first aspect, there is provided a method comprising: storing, in one or more memories, a network stack comprising an application layer and a lower layer lower than the application layer; determining, by one or more processors, based at least on first data obtained via a network interface wirelessly connected to a cellular network or from the lower layer, that at least one of cell loading or network congestion is present; adjusting, by the one or more processors, based at least on the first data, one or more operations at the application layer to generate one or more frames; and wirelessly transmitting, via the network interface, the one or more frames.

The first data may comprise at least one of a number of packets indicating congestion notification, or a status of a buffer at the lower layer.

Adjusting the one or more operations may comprise adjusting, based at least on the first data, a current bitrate of a coder-decoder (codec) operation.

The current bitrate of the codec operation may be adjusted based on the first data and the current bitrate of the codec, using a look-up table (LUT).

The one or more frames may comprise at least one of video data, audio data, or image data.

Adjusting the one or more operations may comprise: adjusting, based at least on the first data, a resolution of the one or more frames; and performing, using the adjusted resolution, down-sampling on the one or more frames.

Adjusting the one or more operations may comprise: adjusting, based at least on the first data, a frame rate of the one or more frames; and performing, using the adjusted frame rate, pacing on the one or more frames.

The method may further comprise: determining that bursty uplink traffic is present; receiving a payload of a frame; dividing the payload into a plurality of chunks; and wirelessly transmitting, via the network interface, each of the plurality of chunks.

The method may further comprise: determining a first time duration in which none of cell loading or network congestion is present; and scheduling a first one of the plurality of chunks to be transmitted for the first time duration.

The method may further comprise: determining, based at least on the first data, a second time duration in which at least one of cell loading or network congestion is present; and deferring scheduling of a second one of the plurality of chunks until the second time duration has elapsed.

According to a second aspect, there is provided a device comprising: a network interface wirelessly connected to a cellular network; one or more memories; and one or more processors configured to carry out the method of the first aspect.

According to a third aspect, there is provided a computer program product comprising instructions which, when executed by a processor associated with a network interface wirelessly connected to a cellular network, and one or more memories, causes the processor to carry out the method of the first aspect.

According to a fourth aspect, there is provided a computer readable storage medium comprising instructions which, when executed by a processor associated with a network interface wirelessly connected to a cellular network, and one or more memories, causes the processor to carry out the method of the first aspect.

### BRIEF DESCRIPTION OF THE DRAWINGS

The accompanying drawings are not intended to be drawn to scale. Like reference numbers and designations in the various drawings indicate like elements. For purposes of clarity, not every component can be labeled in every drawing.

FIG. 1 is a diagram of an example wireless communication system, according to an example implementation of the present disclosure.

FIG. 2 is a diagram showing example components of a base station and a user equipment, according to an example implementation of the present disclosure.

FIG. 3 is an example of a device including a controller for adapting operations of the device based on network conditions, according to an example implementation of the present disclosure.

FIG. 4 illustrates an example of an adaptation system for adapting a bitrate of a coder-decoder (codec) based on network conditions, according to an example implementation of the present disclosure.

FIG. 5 illustrates an example of an adaptation system for adapting a resolution of data (e.g., video/audio/image data) based on network conditions, according to an example implementation of the present disclosure.

FIG. 6 illustrates an example of an adaptation system for adapting a frame rate of data (e.g., video/audio data) based on network conditions, according to an example implementation of the present disclosure.

FIG. 7 illustrates an example adaptation scheme of traffic pipelining and shaping based on network conditions, according to an example implementation of the present disclosure.

FIG. 8 is a flowchart showing a process for adapting operations of a device based on network conditions, according to an example implementation of the present disclosure.

## DETAILED DESCRIPTION

Before turning to the figures, which illustrate certain examples in detail, it should be understood that the present disclosure is not limited to the details or methodology set forth in the description or illustrated in the figures. It should also be understood that the terminology used herein is for the purpose of description only and should not be regarded as limiting.

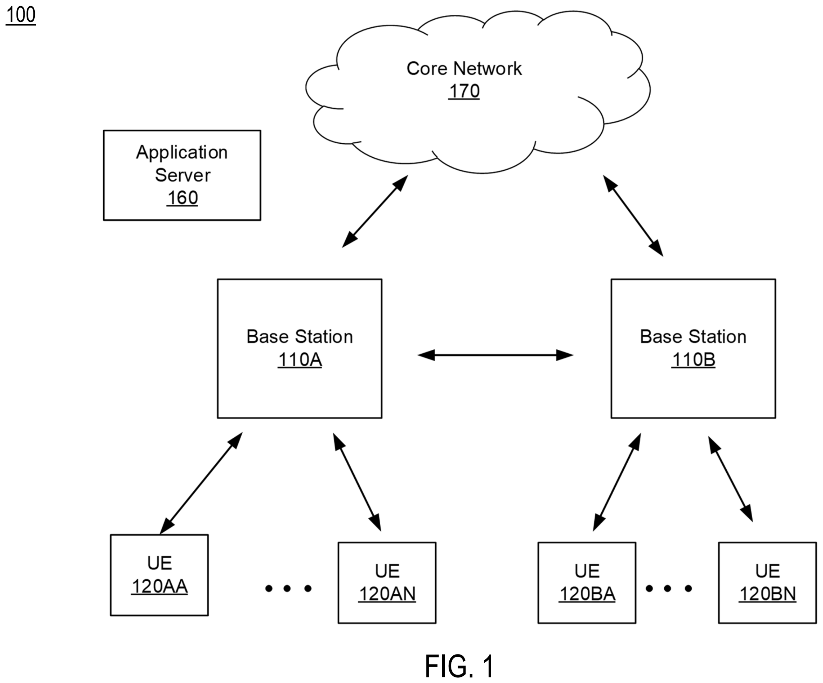

FIG. 1 illustrates an example wireless communication system 100. The wireless communication system 100 may include base stations 110A, 110B (also referred to as "wireless communication nodes 110" or "stations 110") and user equipments (UEs) 120AA...120AN, 120BA...120BN (also referred to as "wireless communication devices 120" or "terminal devices 120"). The wireless communication link may be a cellular communication link conforming to 3G, 4G, 5G, 6G or other cellular communication protocols. In one example, the wireless communication link supports, employs or is based on an orthogonal frequency division multiple access (OFDMA). In one aspect, the UEs 120AA...120AN are located within a geographical boundary with respect to the base station 110A, and may communicate with or through the base station 110A. Similarly, the UEs 120BA...120BN are located within a geographical boundary with respect to the base station 110B, and may communicate with or through the base station 110B. A network between UEs 120 and the base stations 110 may be referred to as radio access network (RAN). In some examples, the wireless communication system 100 includes more, fewer, or different number of base stations 110 than shown in FIG. 1.

In some examples, the UE 120 may be a user device such as a mobile phone, a smart phone, a personal digital assistant (PDA), tablet, laptop computer, wearable computing device (e.g., head mounted display, smart watch), etc. Each UE 120 may communicate with the base station 110 through a corresponding communication link. For example, the UE 120 may transmit data to a base station 110 through a wireless communication link (e.g., 3G, 4G, 5G, 6G or other cellular communication link), and/or receive data from the base station 110 through the wireless communication link (e.g., 3G, 4G, 5G, 6G or other cellular communication link). Example data may include audio data, image data, text, etc. Communication or transmission of data by the UE 120 to the base station 110 may be referred to as an uplink communication. Communication or reception of data by the UE 120 from the base station 110 may be referred to as a downlink communication.

In some examples, the base station 110 may be an evolved node B (eNB), a gNodeB, a femto station, or a pico station. The base station 110 may be communicatively coupled to another base station 110 or other communication devices through a wireless communication link and/or a wired communication link. The base station 110 may receive data (or a RF signal) in an uplink communication from a UE 120. Additionally or alternatively, the base station 110 may provide data to another UE 120, another base station, or another communication device. Hence, the base station 110 allows communication among UEs 120 associated with the base station 110, or other UEs associated with different base stations.

In some examples, the wireless communication system 100 includes a core network 170. The core network 170 may be a component or an aggregation of multiple components that ensures reliable and secure connectivity to the network for UEs 120. The core network 170 may be communicatively coupled to one or more base stations 110A, 110B through a communication link. A communication link between the core network 170 and a base station 110 may be a wireless communication link (e.g., 3G, 4G, 5G, 6G or other cellular communication link) or a wired communication link (e.g., Ethernet, optical communication link, etc.). In some examples, the core network 170 includes user plane function (UPF), access and mobility management function (AMF), policy control function (PCF), etc. The UPF may perform packet routing and forwarding, packet inspection, quality of service (QoS) handling, and provide external protocol data unit (PDU) session for interconnecting data network (DN). The AMF may perform registration management, reachability management, connection management, etc. The PCF may help operators (or operating devices) to easily create and seamlessly deploy policies in a wireless network. The core network 170 may include additional components for managing or controlling operations of the wireless network. In one aspect, the core network 170 may receive a message to perform a network congestion control, and perform the requested network congestion control. For example, the core network 170 may receive explicit congestion notification (ECN) from a base station 110 and/or a UE 120, and perform a network congestion control according to the ECN. For example, the core network 170 may adjust or control an amount of data generated, in response to the ECN. Additionally or alternatively, the core network 170 may adjust or control an amount of data transmitted and/or received, in response to the ECN.

In some examples, the wireless communication system 100 includes an application server 160. The application server 160 may be a component or a device that generates, manages, or provides content data. The application server 160 may be communicatively coupled to one or more base stations 110A, 110B through a communication link. A communication link between an application server 160 and a base station 110 may be a wireless communication link (e.g., 3G, 4G, 5G, 6G or other cellular communication link) or a wired communication link (e.g., Ethernet, optical communication link, etc.). In one aspect, an application server 160 may receive a request for data from a UE 120 through a base station 110, and provide the requested data to the UE 120 through the base station 110. In one aspect, an application server 160 may receive a message to perform a network congestion control, and perform the requested network congestion control. For example, the application server 160 may receive explicit congestion notification (ECN) from a base station 110, a UE 120, or a core network 170, and perform a network congestion control according to the ECN. For example, the application server 160 may adjust or control an amount of data generated, in response to the ECN. Additionally or alternatively, the application server 160 may adjust or control an amount of data transmitted and/or received, in response to the ECN. Additionally or alternatively, the application server 160 may adaptively adjust or control an error correct rate. An error correction rate may be a rate of a number of error correction packets (also referred to as "protection packets") per a set of packets for transmission. An error correction packet can be provided to help recover content. The application server 160 may adaptively adjust the error correction rate, according to a signal quality of a signal received by a UE 120 or a location of the UE 120 with respect to one or more base stations 110.

In some examples, communication among the base stations 110, the UEs 120, application server 160, and the core network 170 is based on one or more layers of Open Systems Interconnection (OSI) model. The OSI model may include layers including: a physical layer, a Medium Access Control (MAC) layer, a Radio Link Control (RLC) layer, a Packet Data Convergence Protocol (PDCP) layer, a Radio Resource Control (RRC) layer, a Non Access Stratum (NAS) layer or an Internet Protocol (IP) layer, and other layer.

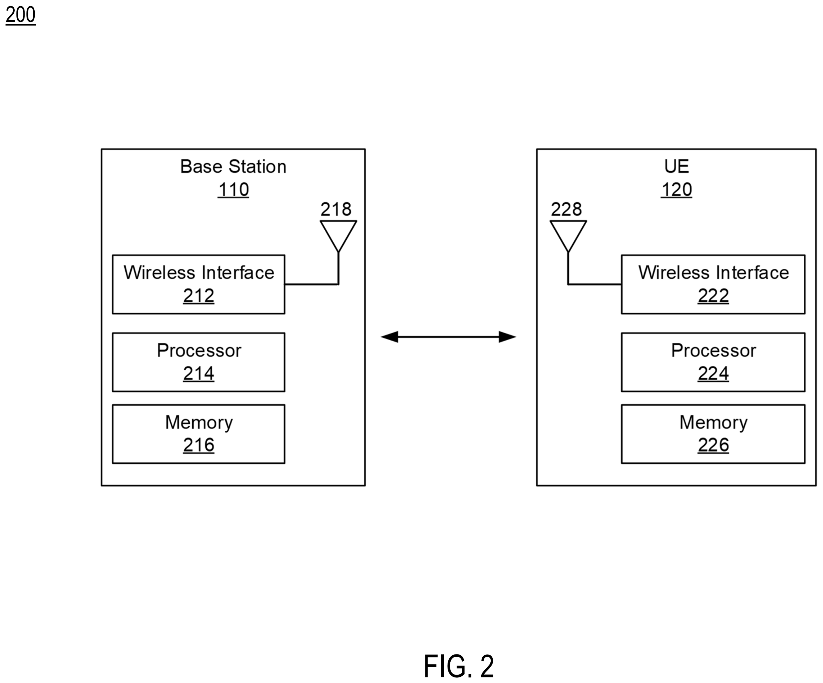

FIG. 2 is a diagram showing example components of a base station 110 and a user equipment 120, according to an example implementation of the present disclosure. In some examples, the UE 120 includes a wireless interface 222, a processor 224, a memory device 226, and one or more antennas 228. These components may be embodied as hardware, software, firmware, or a combination thereof. In some examples, the UE 120 includes more, fewer, or different components than shown in FIG. 2. For example, the UE 120 may include an electronic display and/or an input device. For example, the UE 120 may include additional antennas 228 and wireless interfaces 222 than shown in FIG. 2.

The antenna 228 may be a component that receives a radio frequency (RF) signal and/or transmits a RF signal through a wireless medium. The RF signal may be at a frequency between 200 MHz to 100 GHz. The RF signal may have packets, symbols, or frames corresponding to data for communication. The antenna 228 may be a dipole antenna, a patch antenna, a ring antenna, or any suitable antenna for wireless communication. In one aspect, a single antenna 228 is utilized for both transmitting a RF signal and receiving a RF signal. In one aspect, different antennas 228 are utilized for transmitting the RF signal and receiving the RF signal. In one aspect, multiple antennas 228 are utilized to support multiple-in, multiple-out (MIMO) communication.

The wireless interface 222 includes or is embodied as a transceiver for transmitting and receiving RF signals through one or more antennas 228. The wireless interface 222 may communicate with a wireless interface 212 of the base station 110 through a wireless communication link. In one configuration, the wireless interface 222 is coupled to one or more antennas 228. In one aspect, the wireless interface 222 may receive the RF signal at the RF frequency received through an antenna 228, and downconvert the RF signal to a baseband frequency (e.g., 0~1 GHz). The wireless interface 222 may provide the downconverted signal to the processor 224. In one aspect, the wireless interface 222 may receive a baseband signal for transmission at a baseband frequency from the processor 224, and upconvert the baseband signal to generate a RF signal. The wireless interface 222 may transmit the RF signal through the antenna 228.

The processor 224 is a component that processes data. The processor 224 may be embodied as field programmable gate array (FPGA), application specific integrated circuit (ASIC), a logic circuit, etc. The processor 224 may obtain instructions from the memory device 226, and execute the instructions. In one aspect, the processor 224 may receive downconverted data at the baseband frequency from the wireless interface 222, and decode or process the downconverted data. For example, the processor 224 may generate audio data or image data according to the downconverted data, and present an audio indicated by the audio data and/or an image indicated by the image data to a user of the UE 120. In one aspect, the processor 224 may generate or obtain data for transmission at the baseband frequency, and encode or process the data. For example, the processor 224 may encode or process image data or audio data at the baseband frequency, and provide the encoded or processed data to the wireless interface 222 for transmission.

The memory device 226 is a component that stores data. The memory device 226 may be embodied as random access memory (RAM), flash memory, read only memory (ROM), erasable programmable read-only memory (EPROM), electrically erasable programmable read-only memory (EEPROM), registers, a hard disk, a removable disk, a CD-ROM, or any device capable for storing data. The memory device 226 may be embodied as a non-transitory computer readable medium storing instructions executable by the processor 224 to perform various functions of the UE 120 disclosed herein. In some examples, the memory device 226 and the processor 224 are integrated as a single component.

In some examples, the base station 110 includes a wireless interface 212, a processor 214, a memory device 216, and one or more antennas 218. These components may be embodied as hardware, software, firmware, or a combination thereof. In some examples, the base station 110 includes more, fewer, or different components than shown in FIG. 2. For example, the base station 110 may include an electronic display and/or an input device. For example, the base station 110 may include additional antennas 218 and wireless interfaces 212 than shown in FIG. 2.

The antenna 218 may be a component that receives a radio frequency (RF) signal and/or transmits a RF signal through a wireless medium. The antenna 218 may be a dipole antenna, a patch antenna, a ring antenna, or any suitable antenna for wireless communication. In one aspect, a single antenna 218 is utilized for both transmitting a RF signal and receiving a RF signal. In one aspect, different antennas 218 are utilized for transmitting the RF signal and receiving the RF signal. In one aspect, multiple antennas 218 are utilized to support multiple-in, multiple-out (MIMO) communication.

The wireless interface 212 includes or is embodied as a transceiver for transmitting and receiving RF signals through one or more antennas 218. The wireless interface 212 may communicate with a wireless interface 222 of the UE 120 through a wireless communication link. In one configuration, the wireless interface 212 is coupled to one or more antennas 218. In one aspect, the wireless interface 212 may receive the RF signal at the RF frequency received through antenna 218, and downconvert the RF signal to a baseband frequency (e.g., 0~1 GHz). The wireless interface 212 may provide the downconverted signal to the processor 214. In one aspect, the wireless interface 212 may receive a baseband signal for transmission at a baseband frequency from the processor 214, and upconvert the baseband signal to generate a RF signal. The wireless interface 212 may transmit the RF signal through the antenna 218.

The processor 214 is a component that processes data. The processor 214 may be embodied as FPGA, ASIC, a logic circuit, etc. The processor 214 may obtain instructions from the memory device 216, and execute the instructions. In one aspect, the processor 214 may receive downconverted data at the baseband frequency from the wireless interface 212, and decode or process the downconverted data. For example, the processor 214 may generate audio data or image data according to the downconverted data. In one aspect, the processor 214 may generate or obtain data for transmission at the baseband frequency, and encode or process the data. For example, the processor 214 may encode or process image data or audio data at the baseband frequency, and provide the encoded or processed data to the wireless interface 212 for transmission. In one aspect, the processor 214 may set, assign, schedule, or allocate communication resources for different UEs 120. For example, the processor 214 may set different modulation schemes, time slots, channels, frequency bands, etc. for UEs 120 to avoid interference. The processor 214 may generate data (or UL CGs) indicating configuration of communication resources, and provide the data (or UL CGs) to the wireless interface 212 for transmission to the UEs 120.

The memory device 216 is a component that stores data. The memory device 216 may be embodied as RAM, flash memory, ROM, EPROM, EEPROM, registers, a hard disk, a removable disk, a CD-ROM, or any device capable for storing data. The memory device 216 may be embodied as a non-transitory computer readable medium storing instructions executable by the processor 214 to perform various functions of the base station 110 disclosed herein. In some examples, the memory device 216 and the processor 214 are integrated as a single component.

Extended reality (XR) technologies are increasingly utilized in applications that demand high data rates, low latency, high reliability, and/or robust coverage and mobility in order to deliver a seamless user experience. As XR platforms evolve, emerging use cases such as augmented reality (AR) video calling (e.g., codec avatar communication) and multimodal artificial intelligence (MMAI) introduce even more stringent latency requirements to enable real-time interactions and enhance user engagement. Conventional approaches may be insufficient to meet these demands, particularly as the complexity and volume of XR data increase. Accordingly, there exists a need for adaptation techniques that can improve the overall quality of experience for users of XR systems.

In one aspect, conventional systems typically perform adaptation independently at the application layer and at the lower layers within the device modem, resulting in a lack of coordinated optimization across the device. Such independent adaptation may be inadequate for XR devices, which require adaptation strategies tailored to specific objectives, including use case requirements (e.g., requirements for AR video calling and/or MMAI), traffic characteristics, latency performance targets, and prevailing wireless channel and cellular network conditions. For example, XR applications such as AR video calling may necessitate bi-directional high data rates, while MMAI workloads may generate bursty downlink and/or uplink traffic. Additionally, factors such as cell loading and network congestion further complicate the adaptation process. As a result, there is a need for XR device adaptation techniques that address these diverse and dynamic requirements in a unified and responsive manner. The term "cell loading" (also referred to as "cell load", "cellular load", or simply "load") refers to a measure of how much demand is placed on the resources of a cell, including the number of connected devices, the volume of data being transmitted, and/or the utilization of radio resources (such as bandwidth and time slots). The term "network congestion" refers to a condition in a communication network where the demand for data transmission exceeds the available capacity of the network, resulting in degraded performance for users and devices.

To address these problems, the present disclosure includes systems, devices, and methods for implementing device-side adaptation techniques that can reduce latency by optimizing the processing and transmission of data within the device, thereby improving the overall quality of experience for users of XR systems.

In some examples, a device may include a wireless interface, one or more memories, and one or more processors configured to execute extended-reality (XR) applications with low latency under variable wireless conditions. The one or more processors may be configured to obtain, from a cellular network (e.g., via a wireless network interface) and from lower layers of a modem stack on the device, first data indicative of at least one of congestion, cell loading, channel conditions, buffer status, or delay. For example, the first data may be data received via the network interface (e.g., Low-Latency, Low-Loss, Scalable throughput (L4S) counter values received using real-time transport control protocol (RTCP)). The first data may be data indicative of a status of a buffer in a lower layer (e.g., how long data remains buffered in the buffer before being transmitted to the wireless network). In some examples, the lower layer may refer to a layer lower than the application layer in a protocol stack. In some examples, the lower layer may refer to a layer lower than the transport layer in the protocol stack.

In some examples, the device may include a cross-layer controller on the device side that interfaces between lower layers (e.g., modem PHY/MAC) and upper layers (transport layer and/or application layer) to receive the first data (e.g., indication of high cell loading or network congestion) and generate unified adaptation decisions for outgoing XR traffic (e.g., uplink XR traffic). The first data may include indications from the wireless network and/or proprietary or standardized indications from the device's lower layers (e.g., buffer occupancy, delay expiration, or modem API signals).

In some examples, the controller may implement and/or perform device-side adaptation mechanisms which may include, but not limited to, (i) codec bitrate adaptation at the application layer; (ii) resolution adaptation at the application front-end via down-sampling; (iii) frame-rate adaptation at the application front-end via pacing; and/or (iv) XR traffic pipelining and shaping for bursty uplink payloads (e.g., images or video frames). The controller may select one or more mechanisms based on the first data and target latency requirements.

In some examples, the device may include a media codec at the application layer and congestion control at the transport layer. For use cases such as augmented reality (AR) video calling, low latency and high throughput can maintain a satisfactory user experience. To achieve these objectives, the device may employ codec bitrate adaptation at the application layer in conjunction with the congestion control at the transport layer, thereby facilitating low-latency and high-throughput transmission.

In one aspect, in wireless network environments, devices may encounter channel fluctuations and/or dynamic cell loading, which can result in unpredictable throughput variations in the cellular uplink. Such variability may adversely affect the accuracy of transport layer bitrate estimation and the effectiveness of congestion control mechanisms. In some examples, the device may utilize cellular knowledge obtained from the network or from lower layers and/or modems within the device to inform the codec bitrate adaptation process. The term "modem" (modulator-demodulator") refers to hardware, firmware, software, or a combination thereof within a device (such as a smartphone, tablet, XR headset, or Internet of Thing (IoT) device) that performs the conversion of digital data to radio signals for transmission over the air, and vice versa. By incorporating inputs such as cellular load and congestion status, the device may improve the responsiveness and effectiveness of its adaptation strategy, thereby optimizing media transmission for XR applications.

In some examples, for codec bitrate adaptation, the one or more processors may determine a target media bitrate using network and device inputs (e.g., indication of network congestion or cell loading) in addition to transport-layer feedback (e.g., congestion control at the transport layer). The controller may employ a back-off ratio (denoted by Rbackoff) responsive to congestion indications (e.g., marks associated with Low-Latency, Low-Loss, Scalable throughput (L4S)) and set a new target bitrate equal to a proportional reduction while capping the back-off to a maximum, using the following equation:

$$R_{backoff} = \min (R_{backoff\_max}, N_{L4S} * R_{look-up}) \ldots\ldots\ldots\ldots \text{(Equation 1)},$$

$$Target\_Bitrate = (1- R_{backoff})*Current\_Bitrate \ldots\ldots\ldots\ldots \text{(Equation 2)},$$

where $R_{backoff\_max}$ is a predetermined value (e.g., 0.2 or 20%), $N_{L4S}$ (referred to as "L4S count" or "L4S counter value") is a number of packets indicating L4S marks, and $R_{look-up}$ is a value obtained from a look-up table (LUT) using the current bitrate (Current_Bitrate). In some examples, L4S count refer to the number of explicit congestion notification (ECN) marks or other congestion signals that are counted and reported to help manage congestion in real time.

In some examples, the device may interoperate with transport-layer congestion control (e.g., RTCP-based feedback and/or L4S signaling) while using cellular knowledge (e.g., uplink congestion signaling discussed for 3GPP Release 19) to improve the timeliness and accuracy of bitrate decisions relative to transport-only estimation.

In some examples, a device may implement a resolution and/or frame rate adaptation mechanism applicable to both video-based XR applications and image or video-based XR applications, such as those utilizing MMAI. The adaptation of resolution and/or frame rate enables the application to respond dynamically to changing network conditions, thereby maintaining a consistent user experience even in scenarios characterized by low bandwidth or elevated latency.

In some examples, the resolution adaptation may be performed at the application front-end through techniques such as down-sampling. Down-sampling may involve reducing the spatial resolution of video or image frames.

In some examples, the frame rate adaptation may be performed at the application front-end through techniques such as pacing. Pacing may involve adjusting the temporal rate at which frames are generated or transmitted.

Compared to codec bitrate adaptation, resolution and frame rate adaptation may offer several advantages, including a simpler implementation, a reduction in the amount of data transmitted, and a decrease in computational load on the device. These techniques are particularly well-suited for use with video frames and images, as encountered in MMAI and other XR applications.

In some examples, for resolution and/or frame-rate adaptation, the one or more processors may react immediately to detected high cell load or network congestion by reducing a resolution and/or a frame rate at the application front-end, thereby lowering the data entering the encoder and mitigating latency. This approach may be simpler and faster to apply than encoder-level bitrate changes, and it may be performed on already-encoded frames in certain pipelines by pacing.

In some examples, the controller may maintain trigger logic such as sliding-window counts of congestion indications (e.g., L4S marks) over a defined interval; upon exceeding a threshold, the device may invoke more aggressive adaptation (e.g., reduce a bitrate, a resolution, or a frame rate, and/or enable traffic shaping) and may relax those adaptations when network conditions improve.

In some examples, a device may implement an XR traffic pipelining and shaping mechanism to address scenarios in which strict latency requirements coincide with bursty traffic patterns. For example, in multimodal artificial intelligence (MMAI) applications, uplink traffic may include images or video frames transmitted in bursts. In such cases, conventional approaches that transmit the entire payload at once may be insufficient to satisfy latency constraints.

To overcome these challenges, the device may be configured to divide each payload into multiple smaller chunks and transmit the first available chunks as soon as they are generated. By segmenting the payload in this manner, the network can begin scheduling resources for the initial chunks, thereby reducing overall transmission latency. This pipelining and shaping approach is particularly advantageous at the cell edge and under conditions of high cellular load, where timely delivery of bursty traffic is most difficult to achieve.

In some examples, for XR traffic pipelining and shaping, the one or more processors may divide a payload of a frame into multiple chunks and transmit initial chunks as soon as they become available, allowing earlier scheduling opportunities and alignment with less congested sub-windows within a prescribed latency budget. The controller may defer or advance chunk transmissions to avoid identified high-congestion intervals while satisfying application timing constraints. In some examples, the controller may apply the pipelining and shaping mechanisms at cell edge and/or when the cell is loaded, improving not only latency but also device energy efficiency by avoiding prolonged maximum-power uplink transmissions during congested periods.

In some examples, the one or more processors may allocate available bitrate across multiple sub-streams (e.g., video and audio, or multiple camera views) consistent with application needs and user experience, coordinating the allocation with the controller's adaptation decisions. In some examples, the device may be applicable across cellular and Wi-Fi access, with analogous use of transport-layer feedback and lower-layer indications where available; cellular examples may leverage standardized congestion signaling (e.g., air-interface uplink congestion control), while Wi-Fi examples may use corresponding indicators in that stack.

In some examples, the device-side adaptations may complement RAN-side mechanisms/adaptation such as delay-aware scheduling or traffic prioritization to provide end-to-end latency improvements for XR applications including AR video calling and/or MMAI, which can exhibit bi-directional high-rate flows and bursty uplink/downlink traffic.

Embodiments in the present disclosure have at least the following advantages and benefits. Device-side adaptation can provide useful techniques for reducing latency in augmented reality (AR) wearable products by optimizing the processing and transmission of data within the device. Such optimization is useful for delivering a seamless and enjoyable user experience. By tailoring adaptation to specific objectives-including use case requirements, traffic characteristics, latency performance targets, and/or wireless channel and cellular network conditions-these embodiments enable AR wearable devices to meet diverse user needs and consistently provide high-quality user experiences. In some examples, device-side adaptation techniques can reduce latency by optimizing the processing and transmission of data within the device, thereby improving the overall quality of experience for users of XR systems.

With the foregoing in mind, the figures and description below illustrate various examples of systems and/or methods for adapting operations based on network conditions. It should be noted that the figures and description below are non-limiting examples and can be implemented as any of various other configurations while remaining within the scope of the present disclosure.

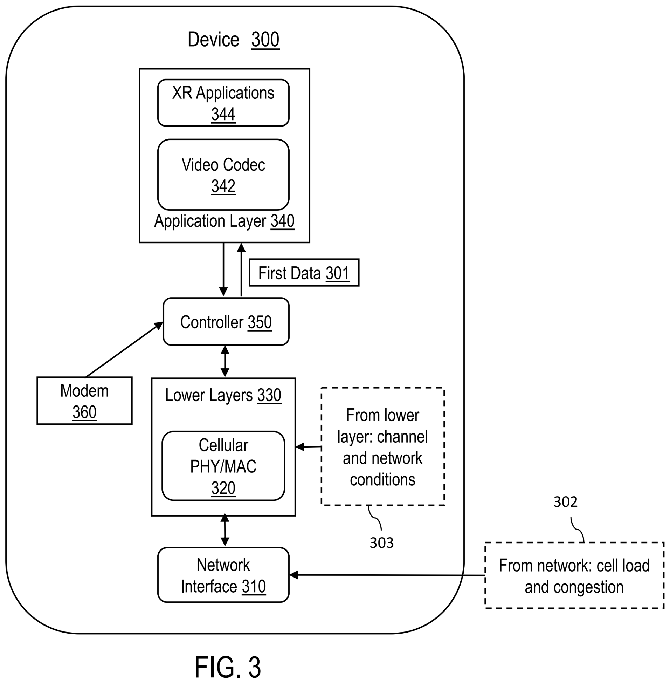

FIG. 3 is an example of a device 300 including a controller 350 for adapting operations of the device based on network conditions, according to an example implementation of the present disclosure. In some examples, the device 300 may include one or more network interfaces 310, one or more modems 360, the controller 350, and/or a protocol stack.

In some examples, the device 300 may have configuration similar to that of UE 120 (see FIG. 2). For example, the device 300 may include one or more processors 224 and one or more memories 226. In some examples, the one or more network interfaces 310 may have configuration similar to that of the wireless interface 222. In some examples, each of the one or more network interfaces 310, the one or more modems 360, the controller 350, and the protocol stack (e.g., lower layers 330 including cellular PHY/MAC 320, application layer 340, transport layer) may be implemented in hardware (e.g., processors, application specific integrated circuit (ASIC), field programmable gate array (FPGA), one or more logic circuits, or any combination of these), firmware, software, or a combination thereof.

In some examples, the protocol stack may include lower layers 330 including a cellular PHY/MAC (physical-/medium access control) layer 320, a transport layer (not shown), and/or an application layer 340. The application layer 340 may include a video/audio codec 342 and/or one or more applications (e.g., XR applications). In some examples, the lower layers 330 may include one or more layers lower than the application layer 340, such as PHY/MAC layer 320, radio link control (RLC) layer, packet data convergence protocol (PDCP) layer, radio resource control (RRC) layer, non-access stratum (NAS) layer, network layer (e.g., internet protocol (IP) layer), and/or transport layer. In some examples, the lower layers 330 may include one or more layers lower than the transport layer, such as PHY/MAC layer 320, RLC layer, PDCP layer, RRC layer, NAS layer, and/or network layer. In some examples, the protocol stack may be stored in one or more memories of the device 300.

Referring to FIG. 3, the controller 350 may coordinate adaptation across the layers in the protocol stack. The controller 350 may interface upward with the XR application 344 and the video codec 342 and downward with the lower layers 330 including the cellular PHY/MAC layer 320 such that the controller 350 is configured to obtain first data 301 indicative of wireless operating conditions (e.g., wireless network conditions) and to drive or adjust application-level media operations responsive to that data. The first data 301 may include indications 302 received from a network of cell loading and congestion, as well as indications 303 obtained from the device lower layers 330 of channel and network conditions.

The controller 350 may be configured to perform, based on the first data 301, one or more adaptation operations for outgoing XR traffic. The operations may include, for example, setting a target media encoding bitrate at the video codec and/or causing the XR application front end (e.g., portion of the application that directly interacts with the user of the application) to adjust spatial and/or temporal characteristics of outgoing frames (e.g., resolution and/or frame rate of video/audio/image data). The controller 350 may thereby coordinate codec-level and application-front-end operations to reduce end-to-end latency while maintaining perceptual quality for XR use cases, including bi-directional high-rate AR video and bursty image/video transfers associated with MMAI.

The controller 350 may obtain, from the network (e.g., via the network interface 310), explicit indications 302 of cell load and/or network congestion and, from the device lower layers 330, indications, measurements or status parameters 303 characterizing local buffering (e.g., status of a buffer in the lower layers 330). The controller 350 may process these inputs (e.g., indications 302, 303) to determine whether a high cell load or congestion condition exists. In response to determining that a high cell load or network congestion is present, the controller 350 may command or control the video codec 342 to reduce bitrate and/or the XR application 344 to down-sample resolution and/or adjust frame rate. In this manner, the controller 350 may act as a cross-layer coordination point between the application subsystem (e.g., application layer 340) and the cellular stack (e.g., protocol stack and/or modem 360), providing more timely and accurate adaptation than application-only or transport-only mechanisms.

The lower layers 330 (including cellular PHY/MAC 320) may provide the controller with lower-layer indications such as channel-quality-related information, buffer status, and/or delay-related status. The network (e.g., cellular network) may provide, via the network interface 310), congestion or load signaling suitable for device-side use. The controller 350 may utilize these indications to shape outgoing media characteristics prior to over-the-air transmission by the cellular stack, thereby mitigating latency increases caused by uplink throughput fluctuations and system load dynamics. The architecture shown for FIG. 3 may be configured to complement radio access network (RAN) techniques such as delay-aware scheduling and traffic prioritization to form an end-to-end latency optimization.

In some examples, the controller 350 may be implemented in software or firmware executing on one or more processors of the device. The controller's outputs may include control messages to the video codec 342 (e.g., bitrate targets) and configuration parameters to the application front end 344 (e.g., resolution or frame-rate settings). The controller's inputs (e.g., first data 301, indications 302, 303) may be delivered via interfaces from the cellular stack and, where applicable, via standardized or vendor-specific APIs exposed by the modem 360. In operation, this arrangement enables the device 300 to adapt the characteristics of the outgoing XR frames in near real time based on contemporaneous knowledge of cell load, congestion, and/or channel conditions as represented in FIG. 3.

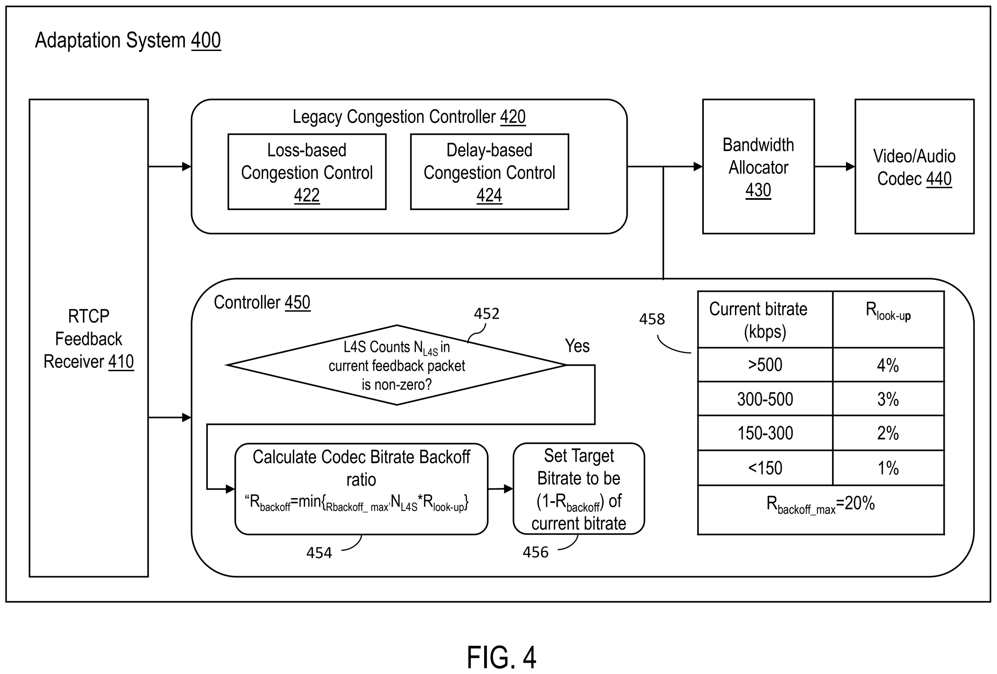

FIG. 4 illustrates an example of an adaptation system 400 for adapting a bitrate of a coder-decoder (codec) 440 based on network conditions, according to an example implementation of the present disclosure. In some examples, the adaptation system 400 may be implemented in a device (e.g., UE 120, device 300). The adaptation system 400 may include an RTCP feedback receiver 410, a legacy congestion controller 420, a bandwidth allocator 430, the video/audio codec 440, and a controller 450. The congestion controller 420 may include a loss-based congestion control 422 and/or a delay-based congestion control 424. In some examples, the controller 450 may have configuration similar to that of the controller 350. In some examples, each of the RTCP feedback receiver 410, the legacy congestion controller 420, the bandwidth allocator 430, the video/audio codec 440, and the controller 450 may be implemented in hardware (e.g., processors, ASIC, FPGA, one or more logic circuits, or any combination of these), firmware, software, or a combination thereof.

Referring to FIG. 4, the system may include a transport-layer feedback path (e.g., RTCP feedback receiver 410, congestion controller 420) and an application-layer media pipeline (e.g., controller 450, bandwidth allocator 430, video/audio codec 440) configured to cooperate in adjusting a bitrate of the media codec 440 responsive to congestion information/indications (e.g., L4S count NL4S from the RTCP feedback receiver 410). The RTCP feedback receiver 410 may be configured to obtain transport feedback for real-time communication flows. The target bitrate of the video/audio codec 440 can be adapted according to congestion information (e.g., L4S count NL4S). The controller 450 may perform an L4S-triggered congestion control using a rate adaptation function (e.g., Equation 1) that derives a codec bitrate back-off from low-latency explicit congestion information, such as L4S markings, conveyed in feedback packets via the RTCP feedback receiver 410.

The RTCP feedback receiver 410 may parse feedback (e.g., feedback packets) associated with an ongoing XR session. In some examples, the RTCP feedback receiver 410 may determine a count NL4S of congestion indications (e.g., L4S marks) present in a current feedback interval.

In step 452, the controller 450 may detect or determine that the count is non-zero. In step 454, the controller 450 may compute a codec bitrate back-off ratio Rbackoff using Equation 1 and a look-up table (LUT) 458. In some examples, the LUT 458 includes (1) a plurality of ranges of current bitrate and (2) Rlook-up values corresponding to the respective ranges. By way of illustration, the LUT 458 may prescribe a back-off value of 4% for current bitrates above 500 kbps, 3% for current bitrates 300-500 kbps, 2% for current bitrates 150-300 kbps, and 1% for current bitrates below 150 kbps, with the overall back-off limited by Rbackoff_max (which may be a predetermined value, e.g., 0.2 or 20%). For example, in step 454, the controller 450 may identify Rlook-up in the LUT 458 using the current bitrate of the codec, and use the values NL4S and Rlook-up to compute Rbackoff using Equation 1. In step 456, the controller 450 may compute or determine, based on Rbackoff, an adjusted current bitrate (also referred to as "new target current bitrate) using Equation 2.

In some examples, the controller 450 for performing a L4S-triggered codec control may coexist with the legacy loss-based control 422 and/or the legacy delay-based congestion control 424 such that the codec's target bitrate can reflect both traditional transport dynamics (using the legacy congestion controller 420) and the more immediate, fine-grained congestion signal available from L4S (using the controller 450). The output of the combined control may be presented to the bandwidth allocator 430 that distributes available bitrate among one or more sub-streams (e.g., video and audio, or multiple camera views) before configuring the video/audio codec 440. In operation, this arrangement enables the device (e.g., device 300) to react promptly to emerging congestion by proportionally and predictably stepping down the codec rate, while bounding the magnitude of any single adjustment (e.g., using Rbackoff_max) to avoid destabilizing the user experience.

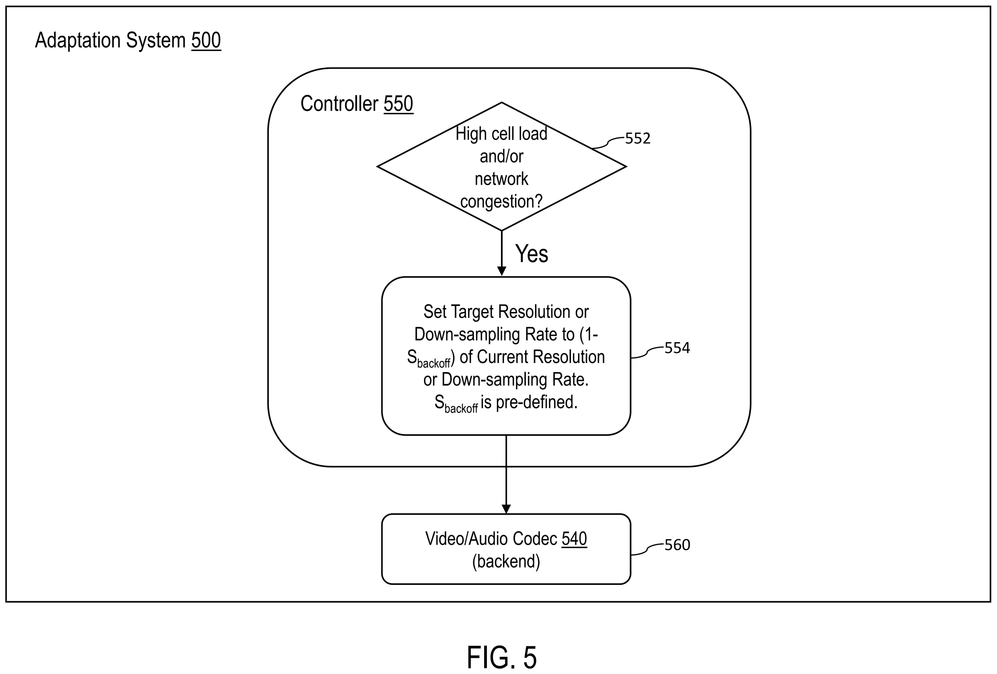

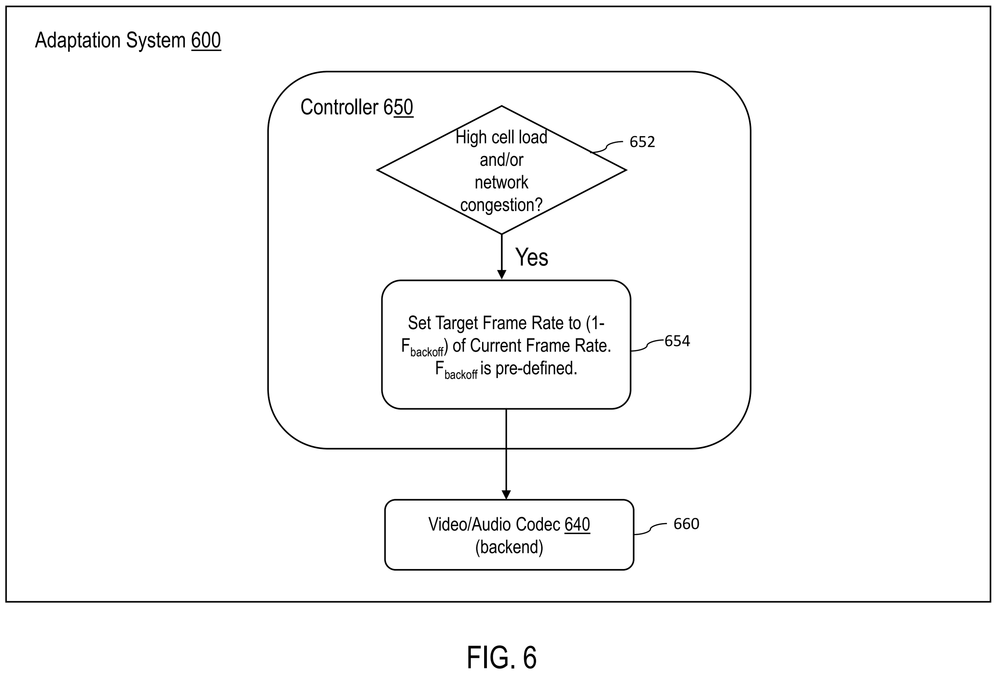

In some examples, the parameters used by the back-off computation (e.g., the bitrate range bins in LUT 458, the per-bin back-off values in LUT 458, and the maximum back-off value Rbackoff_max) may be selected for a given XR use case (e.g., AR video calling or MMAI image/video bursts) to balance latency reduction against perceptual quality. The device may integrate the L4S-informed application-layer rate adaptation (using the controller 450) with other device-side adaptations (e.g., resolution control and/or frame-rate control as shown in FIG. 5 and FIG. 6) and with lower-layer cellular knowledge (e.g., indication 303), thereby improving end-to-end latency performance under fluctuating uplink throughput and cell load conditions.

FIG. 5 illustrates an example of an adaptation system 500 for adapting a resolution of data (e.g., video/audio/-image data) based on network conditions, according to an example implementation of the present disclosure. The adaptation system 500 may include a video/audio codec 540 and a controller 550. In some examples, the video/audio codec 540 may have configuration similar to that of the video/audio codec 342 or 440. In some examples, the controller 550 may have configuration similar to that of the controller 350 in the device 300. In some examples, the controller 550 may be implemented in hardware (e.g., processors, ASIC, FPGA, one or more logic circuits, or any combination of these), firmware, software, or a combination thereof.

Referring to FIG. 5, the controller 550 may implement a resolution adaptation function that responds to cell loading and/or network congestion (e.g., first data 301 or indications 302, 303) by reducing the spatial resolution of outgoing XR frames prior to transmission. For example, the device (e.g., device 300) may include a wireless interface (e.g., network interface 310), a cellular protocol stack (including lower layers 330), an application subsystem (e.g., application layer 340) that generates XR frames, a video codec, and the controller 550 configured to obtain the first data (e.g., first data 301) indicative of at least one of cell load, congestion, channel condition, buffer status, or delay. In step 552, the controller 550 may determine that a high-load or congestion condition exists. Upon determining that a high-load or congestion condition exists, in step 554, the controller 500 may cause the XR application front end (e.g., XR applications 344) and/or an encoder pre-processing stage to down-sample the frame resolution according to a predefined factor (e.g., Sbackoff).

In some examples, the controller 550 may compute an adjusted resolution down-sampling rate (also referred to as "target resolution down-sampling rate") using Equation 3 as follows:

$$\text{Target\_Down-Sampling\_Rate} = (1- S_{backoff})*\text{Current\_Down-Sampling\_Rate} \dots \text{(Equation 3)},$$

where $S_{backoff}$ is a predefined back-off factor selected for the current operating state, and Current_Down-Sampling_Rate is the current down-sampling rate used by the video/audio codec 540. The controller 550 may apply the adjusted down-sampling rate to reduce one or more spatial dimensions of frames (e.g., width and/or height) prior to encoding (by the video/audio codec 540) in step 560, thereby lowering the data volume presented to the video codec and reducing the end-to-end latency under adverse wireless conditions. The down-sampling factor $S_{backoff}$ may be selected from a policy or a table tailored to an XR use case so as to balance latency improvement against perceptual quality.

In some examples, the controller 550 may obtain the first data (e.g., first data 301) from network-provided indications (e.g., air-interface uplink congestion control signaling) and from device lower-layer measurements exposed by the modem (e.g., buffer occupancy or delay-related status provided by the modem 360). The controller 550 may maintain trigger logic, such as a sliding-window count of congestion indications, and upon satisfaction of a threshold (e.g., the sliding-window count is greater than the threshold) may activate resolution down-sampling immediately, with the down-sampled frames then passed to the video codec (backend) for compression and subsequent wireless transmission. This fast-acting path can enable prompt relief of congestion by reducing the spatial payload without waiting for codec re-tuning cycles (e.g., compared to the adaptation shown in FIG. 4).

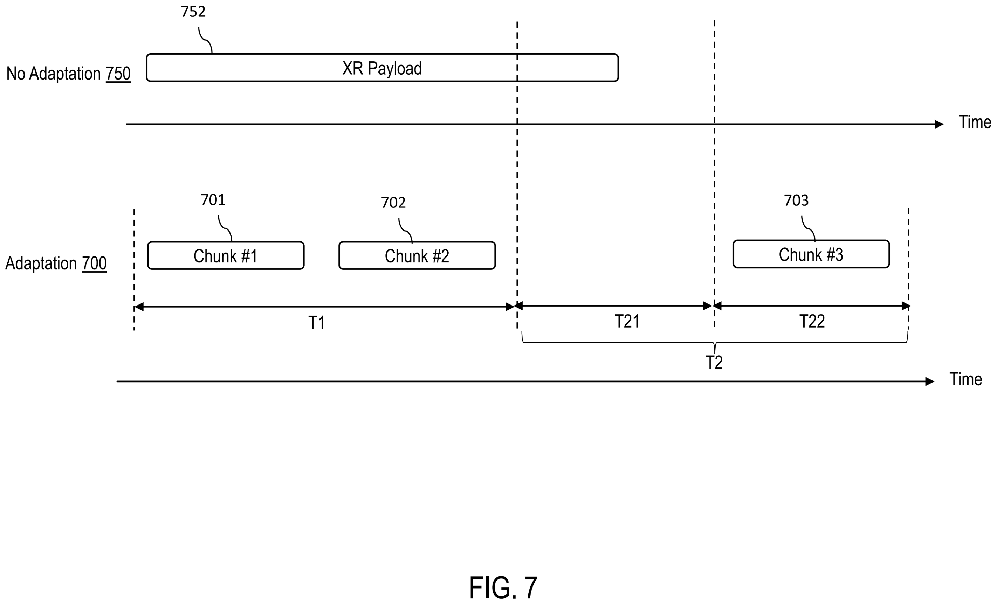

In some examples, the resolution adaptation of FIG. 5 may operate alone or in concert with other device-side adaptations, including codec bitrate adaptation (see FIG. 4), frame-rate adaptation (see FIG. 6) and pipelining and shaping (FIG. 7). When used in concert, the controller 550 may prioritize resolution down-sampling for immediate relief of congestion and then coordinate with bitrate and/or frame-rate controls to stabilize quality as conditions evolve. The arrangement depicted for FIG. 5 therefore provides an application-front-end mechanism that is simple to invoke, computationally efficient, and effective for latency mitigation in XR scenarios, including AR video and bursty MMAI traffic.

FIG. 6 illustrates an example of an adaptation system 600 for adapting a frame rate of data (e.g., video/audio data) based on network conditions, according to an example implementation of the present disclosure. The adaptation system 600 may include a video/audio codec 640 and a controller 650. In some examples, the video/audio codec 640 may have configuration similar to that of the video/audio codec 342 or 440. In some examples, the controller 650 may have configuration similar to that of the controller 350 in the device 300. In some examples, the controller 650 may be implemented in hardware (e.g., processors, ASIC, FPGA, one or more logic circuits, or any combination of these), firmware, software, or a combination thereof.

In some examples, the controller 650 may implement a frame-rate adaptation function that responds to wireless high-load or congestion conditions by reducing the temporal density of outgoing XR frames prior to transmission. For example, the device (e.g., device 300) may include a wireless interface (e.g., network interface 310), a cellular protocol stack (including lower layers 330), an application subsystem (e.g., application layer 340) that generates XR frames, a video codec (backend), and the controller 650 configured to obtain first data (e.g., first data 301) indicative of at least one of cell load, congestion, channel condition, buffer status, or delay. In step 652, the controller 650 may determine that a high-load or congestion condition exists. Upon determining that a high-load or congestion condition exists, in step 654, the controller 650 may set an adjusted frame rate (also referred to as "target frame rate") using Equation 4 as follows:

$$\text{Target\_Frame\_Rate} = (1- F_{backoff})*\text{Current\_Frame\_Rate} \dots \text{(Equation 4)},$$

where $F_{backoff}$ is a predefined back-off factor selected for the current operating state, and Current_Frame_Rate is the current frame rate used by the video/audio codec 640. Using the target frame rate, the controller 650 may cause the application front end (e.g., XR applications 344) to pace frame emission accordingly. Subsequently, the controller 650 may cause the application front end to provide paced frames to the video codec 640 (backend) for compression and transmission in step 660.

In some examples, the controller 650 may obtain the first data (e.g., first data 301) from network-provided indications (e.g., air-interface uplink congestion control signaling) and from device lower-layer measurements exposed by the modem (e.g., buffer occupancy or delay-related status provided by the modem 360). The controller 550 may maintain trigger logic, such as a sliding-window count of congestion indications, and upon satisfaction of an initial threshold (e.g., the sliding-window count is greater than the threshold) may activate frame-rate down-selection immediately, with the down-selected rate held until congestion indicators fall below a release threshold (which may be the same as the initial threshold). This arrangement enables the device to react promptly to adverse conditions by reducing temporal load without waiting for encoder retuning cycles (e.g., compared to the adaptation shown in FIG. 4).

In some examples, frame-rate adaptation may be executed at the application front end (e.g., XR applications 344) via a pacing mechanism that suppresses or defers the emission of selected frames according to the target frame rate, while preserving application timing constraints and synchronization of associated media streams (e.g., audio). The pacing may be applied to already-encoded frames in pipelines that support post-encode scheduling, or to pre-encode frames upstream of the codec, thereby lowering the number of frames entering the encoder and reducing both data volume and compute load. Example back-off factors (e.g., Fbackoff) may include a 50% reduction (e.g., from 30 frames per second to 15 frames per second) under severe congestion, with intermediate steps selectable based on policy.

In some examples, the controller 650 may coordinate frame-rate adaptation with other device-side adaptations, including codec bitrate adaptation (see FIG. 4) and resolution adaptation (see FIG. 5) and pipelining and shaping (FIG. 7), to achieve end-to-end latency targets while managing perceptual quality. For instance, frame-rate pacing may be invoked for immediate relief, followed by bitrate and/or resolution adjustments to stabilize quality as conditions evolve. Such coordinated control is particularly useful for XR use cases including bi-directional AR video and MMAI, which may exhibit bursty traffic and strict latency budgets.

In some examples, the parameters governing frame-rate adaptation (e.g., the values of Fbackoff, trigger thresholds, and/or minimum and maximum frame rates) may be defined by a policy table tailored to a target XR scenario and device capability, thereby balancing responsiveness against temporal smoothness and user-experience considerations. The architecture depicted for FIG. 6 thus provides a simple, fast-acting mechanism for latency mitigation that operates at the application front end while interoperating with the video codec backend and the cellular stack.

FIG. 7 illustrates an example adaptation scheme 700 of traffic pipelining and shaping based on network conditions, according to an example implementation of the present disclosure. FIG. 7 also illustrates, as a comparative example, a scheme 750 without adaptation in which a complete payload 752 is transmitted in a single burst.

In some examples, a device (e.g., device 300) may implement or perform a traffic pipelining and shaping mechanism to meet strict latency requirements for bursty uplink payloads generated by XR applications, such as images or video frames used for MMAI. The device may include a wireless interface (e.g., network interface 310), a cellular stack (including lower layers 330), an application subsystem (e.g., application layer 340), and a controller (e.g., controller 350) configured to obtain first data (e.g., first data 301) indicative of at least one of cell load, congestion, channel condition, buffer status, or delay. Based on the first data, the controller may determine that transmitting a complete payload in a single burst would increase queuing delay under current network conditions. For example, referring to FIG. 7, assuming that a high cell load or network congestion is present during some intervals (e.g., sub-interval T21), the complete payload 752 may experience the high cell load or network congestion during the interval T2, causing an increased queuing delay. Upon determining that transmitting a complete payload in a single burst would increase queuing delay under current network conditions, the controller may instead cause the payload to be divided into multiple chunks (e.g., Chunk #1 (701), Chunk #2 (702), and Chunk #3 (703)) and transmitted in a pipelined fashion.

Referring to FIG. 7, the controller may divide or segment the payload into Chunk #1, Chunk #2, and Chunk #3 and schedule the chunks across time sub-intervals (e.g., T1, T21, T22) within an application latency budget. The controller may cause initial chunks (e.g., Chunk #1, Chunk #2) to be sent as soon as they become available, thereby advancing uplink scheduling opportunities and enabling earlier delivery of partial content while deferring later chunks (e.g., Chunk #3) to less congested sub-windows (e.g., sub-interval T22). By aligning chunk transmissions with sub-intervals having reduced congestion (e.g., sub-interval T22), the device can reduce head-of-line blocking and mitigate latency growth caused by cellular load dynamics.

In some examples, the controller may identify one or more high-congestion intervals (e.g., sub-interval T21) and lower-congestion intervals (e.g., sub-intervals T1, T22) from the first data (e.g., first data 301) and schedule chunk transmissions accordingly (e.g., schedule the chucks for sub-intervals T1, T22). For example, when the first data indicates that a first portion of a latency window (e.g., sub-interval T21 of the latency window T2) is congested, the controller may defer transmission of at least one chunk (e.g., Chunk #3) until a subsequent portion of the window (e.g., sub-interval T22) expected to exhibit lower congestion, while ensuring that all chunks are transmitted within the allowed latency budget for the XR use case. This opportunistic scheduling may be particularly beneficial at cell edge and when the serving cell is loaded, where sending a single, large payload would otherwise require prolonged maximum-power transmission and increased airtime.

In some examples, the pipelining and shaping mechanism shown in FIG. 7 may operate in concert with other device-side adaptations, including codec bitrate adaptation (see FIG. 4) and/or resolution/frame-rate adaptation (FIG. 5 and FIG. 6), to achieve end-to-end latency objectives. The controller may invoke chunking to provide immediate relief under bursty traffic while concurrently or subsequently adjusting media bitrate and visual parameters (e.g., using the adaptation schemes shown in FIG. 4, FIG. 5, FIG. 6) to stabilize quality as conditions evolve. In operation, the arrangement depicted in FIG. 7 allows the device to schedule smaller units of work into less congested sub-windows (e.g., T1, T22) while respecting the application's latency constraints (e.g., allowed latency budget), thereby improving responsiveness and user experience for XR scenarios.

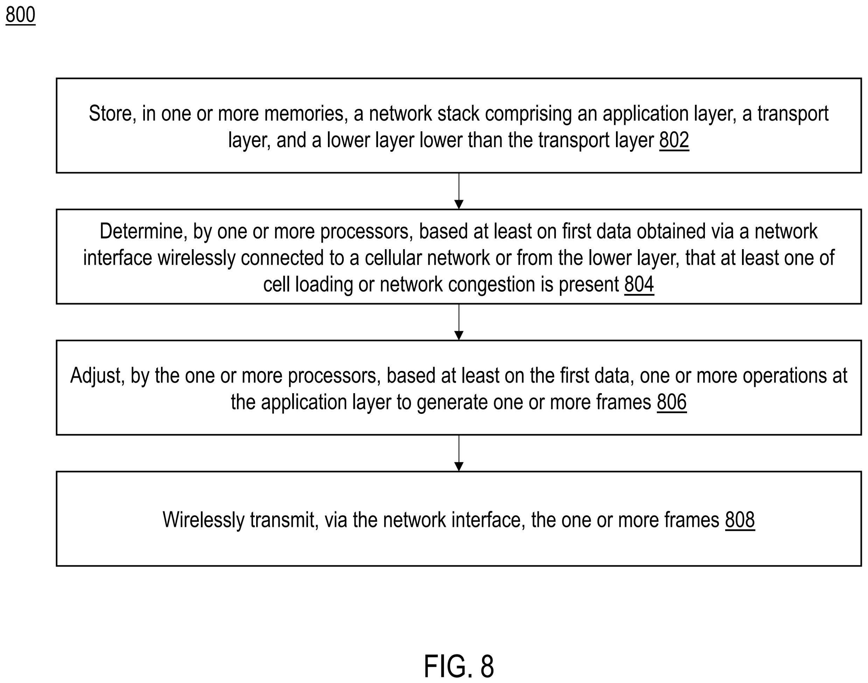

FIG. 8 is a flowchart showing a process 800 for adapting operations of a device based on network conditions, according to an example implementation of the present disclosure. In some examples, the process 800 is performed by a device (e.g., the device 300, the UE 120, or otherwise any device configured to adapt operations based on network conditions) including one or more processors (e.g., processors 224), one or more memories (e.g., memories 226) and a transmitter or a network interface wirelessly connected to a cellular network (e.g., the wireless interface 222). In some examples, the process 800 may be performed by a UE configured to transmit data to a base station. In some examples, the process 800 is performed by other entities. In some examples, the process 800 includes more, fewer, or different steps than shown in FIG. 8.

In some examples, in step 802, the one or more processors of a device (e.g., the device 300, the UE 120) may store a network stack including an application layer (e.g., application layer 340), and a lower layer (e.g., lower layer 330) lower than the application layer.

In some examples, in step 804, the one or more processors of the device may determine, based at least on first data (e.g., first data 301) obtained via the network interface (e.g., indications 302 based on packets with L4S marks received by RTCP feedback receiver 410) or from the lower layer (e.g., indications 303), that at least one of cell loading or network congestion is present. In some examples, the first data may include at least one of a number of packets indicating congestion notification (e.g., L4S count NL4S), or a status of a buffer at the lower layer (e.g., how long data remains buffered in the buffer before being transmitted to the wireless network).

In some examples, in step 806, the one or more processors of the device may adjust, based at least on the first data, one or more operations at the application layer (e.g., adjusting bitrate of codec, adjusting resolution and/or frame rate used by the codec, pipelining and shaping uplink traffic) to generate one or more frames.

In some examples, in adjusting the one or more operations, the one or more processors may be configured to adjust, based at least on the first data, a current bitrate of a coder-decoder (codec) operation (e.g., using Equation 1 and Equation 2). The current bitrate of the codec operation may be adjusted based on the first data and the current bitrate of the codec, using a look-up table (LUT) (e.g., LUT 458).

In some examples, the one or more frames may include at least one of video data, audio data, or image data. In adjusting the one or more operations, the one or more processors may be configured to adjust, based at least on the first data, a resolution of the one or more frames (e.g., using Equation 3). The one or more processors may be configured to perform, using the adjusted resolution, down-sampling on the one or more frames (e.g., step 554).

In some examples, in adjusting the one or more operations, the one or more processors may be configured to adjust, based at least on the first data, a frame rate of the one or more frames (e.g., using Equation 4). The one or more processors may be configured to perform, using the adjusted frame rate, pacing on the one or more frames (e.g., step 654).

In some examples, the one or more processors may be configured to determine that bursty uplink traffic is present. In some examples, the one or more processors may determine that bursty uplink traffic present, using types of application running on the system or types of data used in the applications (e.g., multimodal data including video, audio, or image). In some examples, the one or more processors may determine that bursty uplink traffic present, by monitoring the size of the uplink traffic (e.g., monitoring whether large amounts of data are sent in short, intense bursts, followed by periods of little or no activity). The one or more processors may be configured to receive a payload of a frame (e.g., payload 752). The one or more processors may be configured to divide the payload into a plurality of chunks (e.g., Chunks 701, 702, 703). The one or more processors may be configured to wirelessly transmit, via the network interface, each of the plurality of chunks.

In some examples, the one or more processors may be configured to determine a first time duration (e.g., T1) in which none of cell loading or network congestion is present. The one or more processors may be configured to schedule a first one of the plurality of chunks (e.g., Chunk #1) to be transmitted for the first time duration (e.g., T1).

In some examples, the one or more processors may be configured to determine, based at least on the first data, a second time duration (e.g., T21) in which at least one of cell loading or network congestion is present. The one or more processors may be configured to defer scheduling of a second one of the plurality of chunks (e.g., Chunk #3) until the second time duration (e.g., T21) has elapsed.

In some examples, in step 808, the one or more processors of the device may wirelessly transmit, via the network interface (e.g., wireless interface 222, network interface 310), the one or more frames.

Having now described some illustrative implementations, it is apparent that the foregoing is illustrative and not limiting, having been presented by way of example. In particular, although many of the examples presented herein involve specific combinations of method acts or system elements, those acts and those elements can be combined in other ways to accomplish the same objectives. Acts, elements and features discussed in connection with one implementation are not intended to be excluded from a similar role in other implementations or implementations.

The hardware and data processing components used to implement the various processes, operations, illustrative logics, logical blocks, modules and circuits described in connection with the embodiments disclosed herein may be implemented or performed with a general purpose single- or multi-chip processor, a digital signal processor (DSP), an application specific integrated circuit (ASIC), a field programmable gate array (FPGA), or other programmable logic device, discrete gate or transistor logic, discrete hardware components, or any combination thereof designed to perform the functions described herein. A general purpose processor may be a microprocessor, or, any conventional processor, controller, microcontroller, or state machine. A processor also may be implemented as a combination of computing devices, such as a combination of a DSP and a microprocessor, a plurality of microprocessors, one or more microprocessors in conjunction with a DSP core, or any other such configuration. In some examples, particular processes and methods may be performed by circuitry that is specific to a given function. The memory (e.g., memory, memory unit, storage device, etc.) may include one or more devices (e.g., RAM, ROM, Flash memory, hard disk storage, etc.) for storing data and/or computer code for completing or facilitating the various processes, layers and modules described in the present disclosure. The memory may be or include volatile memory or non-volatile memory, and may include database components, object code components, script components, or any other type of information structure for supporting the various activities and information structures described in the present disclosure. According to an exemplary embodiment, the memory is communicably connected to the processor via a processing circuit and includes computer code for executing (e.g., by the processing circuit and/or the processor) the one or more processes described herein.

The present disclosure contemplates methods, systems and program products on any machine-readable media for accomplishing various operations. The embodiments of the present disclosure may be implemented using existing computer processors, or by a special purpose computer processor for an appropriate system, incorporated for this or another purpose, or by a hardwired system. Embodiments within the scope of the present disclosure include program products comprising machine-readable media for carrying or having machine-executable instructions or data structures stored thereon. Such machine-readable media can be any available media that can be accessed by a general purpose or special purpose computer or other machine with a processor. By way of example, such machine-readable media can comprise RAM, ROM, EPROM, EEPROM, or other optical disk storage, magnetic disk storage or other magnetic storage devices, or any other medium which can be used to carry or store desired program code in the form of machine-executable instructions or data structures and which can be accessed by a general purpose or special purpose computer or other machine with a processor. Combinations of the above are also included within the scope of machine-readable media. Machine-executable instructions include, for example, instructions and data which cause a general purpose computer, special purpose computer, or special purpose processing machines to perform a certain function or group of functions.

The phraseology and terminology used herein is for the purpose of description and should not be regarded as limiting. The use of "including" "comprising" "having" "containing" "involving" "characterized by" "characterized in that" and variations thereof herein, is meant to encompass the items listed thereafter, equivalents thereof, and additional items, as well as alternate implementations consisting of the items listed thereafter exclusively. In one implementation, the systems and methods described herein consist of one, each combination of more than one, or all of the described elements, acts, or components.

Any references to implementations or elements or acts of the systems and methods herein referred to in the singular can also embrace implementations including a plurality of these elements, and any references in plural to any implementation or element or act herein can also embrace implementations including only a single element. References in the singular or plural form are not intended to limit the presently disclosed systems or methods, their components, acts, or elements to single or plural configurations. References to any act or element being based on any information, act or element can include implementations where the act or element is based at least in part on any information, act, or element.

Any implementation disclosed herein can be combined with any other implementation or embodiment, and references to "an implementation," "some implementations," "one implementation" or the like are not necessarily mutually exclusive and are intended to indicate that a particular feature, structure, or characteristic described in connection with the implementation can be included in at least one implementation or embodiment. Such terms as used herein are not necessarily all referring to the same implementation. Any implementation can be combined with any other implementation, inclusively or exclusively, in any manner consistent with the aspects and implementations disclosed herein.

Where technical features in the drawings, detailed description or any claim are followed by reference signs, the reference signs have been included to increase the intelligibility of the drawings, detailed description, and claims. Accordingly, neither the reference signs nor their absence have any limiting effect on the scope of any claim elements.

Systems and methods described herein may be embodied in other specific forms without departing from the characteristics thereof. References to "approximately," "about" "substantially" or other terms of degree include variations of +/-10% from the given measurement, unit, or range unless explicitly indicated otherwise. Coupled elements can be electrically, mechanically, or physically coupled with one another directly or with intervening elements. Scope of the systems and methods described herein is thus indicated by the appended claims, rather than the foregoing description, and changes that come within the meaning and range of equivalency of the claims are embraced therein.

The term "coupled" and variations thereof includes the joining of two members directly or indirectly to one another. Such joining may be stationary (e.g., permanent or fixed) or moveable (e.g., removable or releasable). Such joining may be achieved with the two members coupled directly with or to each other, with the two members coupled with each other using a separate intervening member and any additional intermediate members coupled with one another, or with the two members coupled with each other using an intervening member that is integrally formed as a single unitary body with one of the two members. If "coupled" or variations thereof are modified by an additional term (e.g., directly coupled), the generic definition of "coupled" provided above is modified by the plain language meaning of the additional term (e.g., "directly coupled" means the joining of two members without any separate intervening member), resulting in a narrower definition than the generic definition of "coupled" provided above. Such coupling may be mechanical, electrical, or fluidic.

References to "or" can be construed as inclusive so that any terms described using "or" can indicate any of a single, more than one, and all of the described terms. A reference to "at least one of 'A' and 'B'" can include only 'A', only 'B', as well as both 'A' and 'B'. Such references used in conjunction with "comprising" or other open terminology can include additional items.

Modifications of described elements and acts such as variations in sizes, dimensions, structures, shapes and proportions of the various elements, values of parameters, mounting arrangements, use of materials, colors, orientations can occur without materially departing from the teachings and advantages of the subject matter disclosed herein. For example, elements shown as integrally formed can be constructed of multiple parts or elements, the position of elements can be reversed or otherwise varied, and the nature or number of discrete elements or positions can be altered or varied. Other substitutions, modifications, changes and omissions can also be made in the design, operating conditions and arrangement of the disclosed elements and operations without departing from the scope of the present disclosure.

References herein to the positions of elements (e.g., "top," "bottom," "above," "below") are merely used to describe the orientation of various elements in the FIGURES. The orientation of various elements may differ according to other exemplary embodiments, and that such variations are intended to be encompassed by the present disclosure.

**Claims**

1. A method comprising:

   storing, in one or more memories, a network stack comprising an application layer and a lower layer lower than the application layer;
   determining, by one or more processors, based at least on first data obtained via a network interface wirelessly connected to a cellular network or from the lower layer, that at least one of cell loading or network congestion is present;
   adjusting, by the one or more processors, based at least on the first data, one or more operations at the application layer to generate one or more frames; and
   wirelessly transmitting, via the network interface, the one or more frames.

2. The method of claim 1, wherein the first data comprises at least one of a number of packets indicating congestion notification, or a status of a buffer at the lower layer.

3. The method of claim 1 or 2, wherein adjusting the one or more operations comprises:
   adjusting, based at least on the first data, a current bitrate of a coder-decoder (codec) operation.

4. The method of claim 3, wherein the current bitrate of the codec operation is adjusted based on the first data and the current bitrate of the codec, using a look-up table (LUT).

5. The method of any preceding claim, wherein the one or more frames comprise at least one of video data, audio data, or image data.

6. The method of claim 5, wherein adjusting the one or more operations comprises:

   adjusting, based at least on the first data, a resolution of the one or more frames; and
   performing, using the adjusted resolution, down-sampling on the one or more frames.

7. The method of claim 5 or 6, wherein adjusting the one or more operations comprises:

   adjusting, based at least on the first data, a frame rate of the one or more frames; and
   performing, using the adjusted frame rate, pacing on the one or more frames.

8. The method of any preceding claim, further comprising:

   determining that bursty uplink traffic is present;

receiving a payload of a frame;
dividing the payload into a plurality of chunks; and
wirelessly transmitting, via the network interface, each of the plurality of chunks.

9. The method of claim 8, further comprising:

determining a first time duration in which none of cell loading or network congestion is present; and
scheduling a first one of the plurality of chunks to be transmitted for the first time duration.

10. The method of claim 8 or 9, further comprising:

determining, based at least on the first data, a second time duration in which at least one of cell loading or network congestion is present; and
deferring scheduling of a second one of the plurality of chunks until the second time duration has elapsed.

11. A device comprising:

a network interface wirelessly connected to a cellular network;
one or more memories; and
one or more processors configured to carry out the method of any preceding claim.

12. A computer program product comprising instructions which, when executed by a processor associated with a network interface wirelessly connected to a cellular network, and one or more memories, causes the processor to carry out the method of any of claims 1 to 10.

13. A computer readable storage medium comprising instructions which, when executed by a processor associated with a network interface wirelessly connected to a cellular network, and one or more memories, causes the processor to carry out the method of any of claims 1 to 10.

**100**

Core Network
170

Application
Server
160

Base Station
110A

Base Station
110B

UE
120AA

• • •

UE
120AN

UE
120BA

• • •

UE
120BN

FIG. 1

EP 4 738 918 A1

200

FIG. 2

FIG. 3

EP 4 738 918 A1

**Adaptation System 400**

Legacy Congestion Controller 420
- Loss-based Congestion Control 422
- Delay-based Congestion Control 424

Bandwidth Allocator 430

Video/Audio Codec 440

RTCP Feedback Receiver 410

Controller 450

452 — L4S Counts $N_{L4S}$ in current feedback packet is non-zero? — Yes

454 — Calculate Codec Bitrate Backoff ratio "$R_{backoff}=\min\{R_{backoff\_max}, N_{L4S}*R_{look-up}\}$"

456 — Set Target Bitrate to be $(1-R_{backoff})$ of current bitrate

458

| Current bitrate (kbps) | $R_{look-up}$ |
|---|---|
| >500 | 4% |
| 300-500 | 3% |
| 150-300 | 2% |
| <150 | 1% |
| $R_{backoff\_max}=20\%$ | |

FIG. 4

EP 4 738 918 A1

Adaptation System 500

Controller 550

High cell load and/or network congestion? — 552

Yes

Set Target Resolution or Down-sampling Rate to $(1-S_{backoff})$ of Current Resolution or Down-sampling Rate. $S_{backoff}$ is pre-defined. — 554

Video/Audio Codec 540 (backend) — 560

FIG. 5

EP 4 738 918 A1

Adaptation System <u>600</u>

Controller <u>650</u>

High cell load and/or network congestion? — 652

Yes

Set Target Frame Rate to $(1-F_{backoff})$ of Current Frame Rate. $F_{backoff}$ is pre-defined. — 654

Video/Audio Codec <u>640</u> (backend) — 660

FIG. 6

EP 4 738 918 A1

No Adaptation 750

752

XR Payload

Time

Adaptation 700

701

Chunk #1

702

Chunk #2

703

Chunk #3

T1

T21

T22

T2

Time

FIG. 7

800

Store, in one or more memories, a network stack comprising an application layer, a transport layer, and a lower layer lower than the transport layer 802

Determine, by one or more processors, based at least on first data obtained via a network interface wirelessly connected to a cellular network or from the lower layer, that at least one of cell loading or network congestion is present 804

Adjust, by the one or more processors, based at least on the first data, one or more operations at the application layer to generate one or more frames 806

Wirelessly transmit, via the network interface, the one or more frames 808

FIG. 8

EP 4 738 918 A1

Europäisches
Patentamt

European
Patent Office

Office européen
des brevets

# EUROPEAN SEARCH REPORT

**Application Number**

EP 25 20 9835

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/394076 A1 (WILLARS PER [SE] ET AL) 8 December 2022 (2022-12-08) * figures 1, 5 * * paragraphs [0002], [0004] - [0007], [0020] - [0091], [0116] * ----- | 1-7, 11-13 | INV. H04W28/02 H04L47/25 H04L47/30 H04L47/38 H04L65/752 |
| X | US 2015/043337 A1 (KANAMARLAPUDI SITARAMANJANEYULU [US] ET AL) 12 February 2015 (2015-02-12) * figure 1 * * paragraphs [0008] - [0013], [0061] - [0087] * ----- | 1-3,5,7, 11-13 | |
| X | WO 2024/060308 A1 (APPLE INC [US]) 28 March 2024 (2024-03-28) * paragraphs [0024] - [0027], [0033], [0035] - [0038], [0051] - [0054] * ----- | 1-3,5, 8-13 | |

**TECHNICAL FIELDS SEARCHED (IPC)**

H04L
H04W

The present search report has been drawn up for all claims

| Place of search | Date of completion of the search | Examiner |
|---|---|---|
| The Hague | 10 February 2026 | Tyszka, Krzysztof |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P4C01)

## ANNEX TO THE EUROPEAN SEARCH REPORT
## ON EUROPEAN PATENT APPLICATION NO.

EP 25 20 9835

This annex lists the patent family members relating to the patent documents cited in the above-mentioned European search report.
The members are as contained in the European Patent Office EDP file on
The European Patent Office is in no way liable for these particulars which are merely given for the purpose of information.

10-02-2026

| Patent document cited in search report | Publication date | Patent family member(s) | | Publication date |
|---|---|---|---|---|
| US 2022394076 A1 | 08-12-2022 | CN | 115004659 A | 02-09-2022 |
| | | EP | 4055785 A1 | 14-09-2022 |
| | | US | 2022394076 A1 | 08-12-2022 |
| | | WO | 2021089487 A1 | 14-05-2021 |
| US 2015043337 A1 | 12-02-2015 | US | 2015043337 A1 | 12-02-2015 |
| | | WO | 2015023528 A1 | 19-02-2015 |
| WO 2024060308 A1 | 28-03-2024 | CN | 119923832 A | 02-05-2025 |
| | | EP | 4569773 A1 | 18-06-2025 |
| | | WO | 2024060308 A1 | 28-03-2024 |

EPO FORM P0459

For more details about this annex : see Official Journal of the European Patent Office, No. 12/82